# EUROPEAN PATENT SPECIFICATION

(11) **EP 0 637 659 B1**
(45) Date of publication and mention of the grant of the patent: **11.04.2001**
(21) Application number: 94830365.6
(22) Date of filing: 18.07.1994
(51) Int. Cl.: E04F 15/022, B32B 21/13

(54) **Flooring strips consisting of a layer of inexpensive woody material acting as the base for a row of top quality wooden segments**
Bodenstreifen bestehend aus einer billigen Holzlage, die als Untergrund für eine Reihe von hochwertigen Holzsegmenten dient
Strips de plancher formés par une couche de matériau boisé par chèr servant de base pour une rangée de segments de bois de qualité supérieure

(30) Priority: 06.08.1993 IT AN930044
(43) Date of publication of application: 08.02.1995
(73) Proprietor: Margaritelli Italia S.p.A., 05010 San Venanzo (TR) (IT)
(72) Inventor: Margaritelli, Luca, I-06087 Ponte San Giovanni (PG) (IT)
(74) Representative: Baldi, Claudio

(56) References cited:
- WO-A-89/01857
- DE-A- 3 919 514
- FR-A- 2 537 635

## Description

This invention concerns a method of flooring using individual strips of the type consisting of a layer of low-cost wooden material acting as the base for a row of elements in top quality wood positioned one after the other; said strips being laid in end-to-end relationship in rows to produce a perfectly continuous and regular pattern in which no lines of abutment of adjacent strips in any row coincide with lines of abutment of adjacent strips in an adjacent row.

In this field of technology, strips consisting of a layer of low-cost wood acting as the base of adjacent rows of top quality wooden elements, have already been produced.

These conventional strips, on one hand, make it possible to use elements of top quality wood, which are sometimes scrapped from other production processes, for the flooring rooms, and on the other hand, facilitate and expedite the work of parquet flooring fitters in that with just a few of these strips it is possible to floor surfaces which would otherwise require the use of an extremely high number of individual elements of conventional sizes.

Obviously the smaller the pieces of single elements making up the layer of top quality strips of this kind, the more advantageous this second advantage will be.

Although conventional strips of this kind do give an economical and functional advantage, they are however heavily penalized in terms of appearance.

As mentioned above, the strips used to date have always been produced with a single low-cost woody layer as the base for a number of adjacent rows of staggered elements in top quality wood.

The need to stagger the rows of elements on these strips in fact makes it necessary to fit (consider for example the case of a strip supporting three rows of top quality wooden elements) a section of an element, which might for example be half the normal length, at the longitudinal ends of each element, between the two standard length elements.

When the two elements are laid consecutively, the end section of an element is placed in an aligned and consecutive position with respect to the correspoding element section of the other element; in this way the two sections create an element having the standard length but with a very evident unattractive transverse cut at the centre.

Patent No. DE-A-3 919 514 is quite clearly the expression of the prior art with all the typical problems involved.

Patent DE-A-3 919 514 illustrates the modalities for the formation of a wooden flooring consisting of several plywood boards which act as support for a series of top quality wooden strips; these boards are realised by laying the factory prepared strips side by side, as shown in drawing 1 attached to the German patent.

By laying these elements side by side, a board having a wide surface area is in fact obtained with staggered rows of wooden strips; when a similar board is however abutted consecutively against another identical board - in order to form a complete flooring - irregular sections of top quality wooden strips of the first board and irregular sections of strips of the second board will be positioned consecutively against each other along the seam. In this way the unattractive transverse line of discontinuity between each section of the strip of the first board and the adjacent section of strip of the second board, remains clearly visible.

This becomes even more unattractive in the flooring as a whole, when the sections of two consecutive elements are not symmetrical; in other words when one of the two elements is longer than the other, making the inevitable transverse cut between the two asyimmetrical sections even more apparent.

The item described in the WO-A-8 901 857 patent exists in the prior state of the art in that said item involves a low-cost wooden strip acting as a base for consecutive wooden strips of better aesthetical quality from which the knotty sections have been removed.

The item of this patent is however extremely unsactisfactory from an aesthetical point of view in that the visible top quality strips are always of different and casual lengths due to the fact these strips are not cut in regular pre-established sizes but in a casual manner dictated exclusively by the need to remove the knots on the boards from which the strips are made.

The method according to the invention has been created to resolve this very unattractive aesthetical problem: as mentioned previously, the method in question in based on the use of a strip in low-cost woody material - such as plywood, mediumdensit, chipboard or solid wood - which acts as the base for a single row of top quality wood elements all for the same length and arranged lengthwise.

By using the method according to the invention, it is obvious that two consecutive elements may be abutted against each other on two standard length elements; this makes it almost impossible, at least for someone who is not a floor fitter, to see the front and end of the single elements fitted consecutively on the finished flooring.

Thanks to the new method according to the invention the flooring will have a perfectly continuous and regular pattern.

Obviously on a flooring of this kind, the staggering of the rows of elements may be realized by cutting and arranging the sections of the item according to the invention only against the skirting board of the walls of the room to be floored, namely in a position whereby his unattractive aesthetical effect is almost negligible.

In other words it can be stated that while in the case of the traditional elements the sections of strip are at the centre of the flooring in an extremely visible position, the sections of strip obtained on the elements used in the flooring method according to the patent application in question, occupy only the peripheral position where they in no way compromise the aesthetic value of a flooring in top quality wood.

According to this very brief description it is quite clear how the method according to the patent application in question undoubtedly introduces in the technological sector in question a considerable step forward with respect to the prior art.

According to the same inventive principle an alternative embodiment of the aforementioned flooring strip can be realized with two or more elements in top quality wood having different length; it is evident that by using identical elements of this kind it is possible to realize a flooring with a continuous pattern, even if in this case, the flooring would have regularly and repetitively alternated elements of different length.

For major clarification the description of the invention continues with reference to the enclosed drawings which are intended for purposes of illustration and not in a limiting sense whereby:
- figure 1 is a plan view of the flooring strip used in order to apply the method according to the invention, in its preferred embodiment with elements of top quality wood having same length;
- figure 2 is a side view of the item shown in figure 1;
- figure 3 is a top view of a section of florring realized with several items accordings to figure 1 and 2 where the perimeter of one of these is shown by a line in bold print;
- figure 4 is a plan view of the item according to the invention in an embodiment with elements in top quality wood having different length;
- figure 5 is a side view of the item shown in figure 4;
- figure 6 is a top view of a section of flooring realized with several items according to figures 4 and 5 where the perimeter of one of these is shown by a line in bold print;
- figure 7 is the plan view of a particular embodiment of the item shown in figure 1.

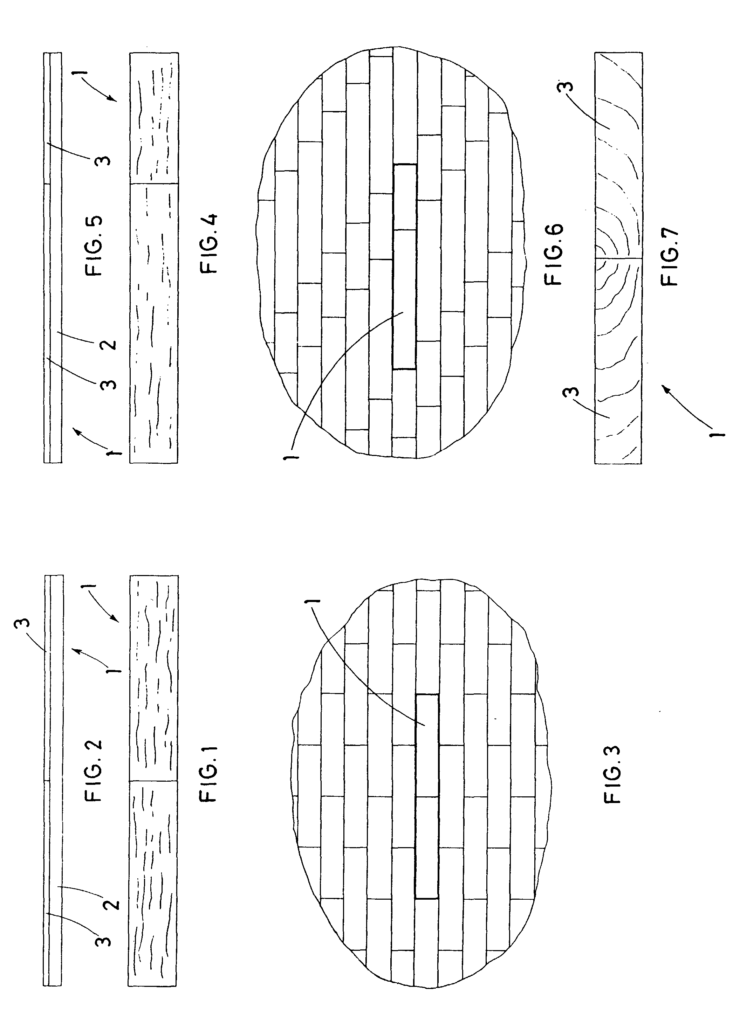

In a first preferred embodiment, the item consists of a flooring strip (1) consisting of a layer of low-cost woody material (2) on which several identical elements in top quality wood (3) are arranged (two in the example shown in figure 1, 2 and 3)lengthwise.

As already stated the item consists on a strip supporting a single row of top quality strips; this means that in the case of this item the top quality strips are always of the same length, even at the ends (as shown in figure 3).

Therefore, when two strips of this kind are laid consecutively, the last strip of the first element and the first strip of the second element, which are adjacent, are both full lengthed, while the transverse line of discontinuity between the same is perfectly confused with the transverse lines of discontinuity between the strips of a same element.

From this point of view it can be stated that proper laying of these strips consecutively permits giving a pattern of perfect continuity to the flooring; it becomes virtually impossible to see the contact point of two consecutive elements.

In other words, by laying elements of this type consecutively a regular and continuous row of top quality strips is obtained.

To stagger this row of strips with respect to the adjacent row of strips, it is necessary to cut in half the end strip of the first of the elements which support the same adjacent row; more precisely, it is necessary to cut the strip abutting against the wall (as shown in said figure 3).

The item according to the invention in another embodiment consists of a flooring strip (1)consisting of a layer of low-cost woody material(3) aligned lengthwise (two in the example as shown in figures 4,5 and 6) having different lengths.

Figure 7 shows an alternative and particular embodiment of the invention of the above strip (1); this item is characterized in that each consecutive pair of its elements in top quality wood (3) features a specular fibre texture obtained by cutting a double element of top quality wood in the direction of the thickness.

## Claims

1. A method of flooring using individual strips (1) of the type consisting of a layer of low-cost wooden material (2) acting as the base for a row of elements in top quality wood (3) positioned one after the other, said strips (1) being layed in end-to-end relationship in rows to produce a perfectly continuous and regular pattern in which no lines of abutment of adjacent strips in any row coincide with lines of abutment of adjacent strips in adjacent row.

2. A method of flooring, according to claim 1, whereby the above elements in top quality wood (3)supported by said layer of low cost material (2)are all of the same length.

3. A method of flooring, according to claim 1, whereby the above elements in top quality wood (3)supported by said layer of low cost material (2) are of two different lengths and mounted according to a regular layout where a longer element is always alternated with a shorter element.

4. A method of flooring, according to claim 1, whereby each consecutive pair of said elements in top quality wood (3)supported by said layer of low cost material (2) is arranged so that the pattern of the natural fibres of one element is symmetric to that of the element consecutive to the same.

## Patentansprüche

1. Methode zur Herstellung von Fußböden unter Verwendung von einzelnen Holzleisten (1), bestehend aus einer Schicht gewöhnlichen Holzes (2), das als Auflage für eine Reihe von nebeneinander angeordneten Edelholzlamellen (3) dient, wobei die besagten Leisten (1) so verlegt werden, dass in einer Reihe die Enden einer Leiste mit den Enden der angrenzenden Leisten so verbunden werden, dass eine absolut gleichmäßige Wirkung und ein regelmäßiges Muster entsteht, in welchem keine Fuge einer Reihe mit den Fugen der daneben liegenden Reihe übereinstimmt.

2. Methode zur Herstellung von Fußböden gemäß Anspruch 1, dadurch gekennzeichnet, dass die besagten Edelholzlamellen (3), die auf der oben angesprochenen Schicht gewöhnlichen Holzes (2) angebracht sind, alle dieselbe Länge besitzen.

3. Methode zur Herstellung von Fußböden gemäß Anspruch 1, dadurch gekennzeichnet, dass die besagten Edelholzlamellen (3) die auf der oben angesprochenen Schicht gewöhnlichen Holzes (2) angebracht sind, zwei verschiedene Längen besitzen und in regelmäßigem Wechsel angeordnet sind, wobei eine lange Lamelle stets mit einer kürzeren Lamelle wechselt.

4. Methode zur Herstellung von Fußböden gemäß Anspruch 1, dadurch gekennzeichnet, dass jedes aufeinanderfolgende Paar der zuvor besagten Edelholzlamellen (3), die auf der oben angesprochenen Schicht gewöhnlichen Holzes (2) angebracht sind, so angeordnet ist, dass die Holzmaserung einer Lamelle symmetrisch zur Holzmaserung der daran anschließenden Lamelle verläuft.

## Revendications

1. Méthode pour la réalisation de sols utilisant des listels individuels en bois (1), du type consistant en une couche de bois de qualité inférieure (2) fonctionnant en tant que support pour une rangée de lamelles en bois de prix (3) disposées l'une à la suite de l'autre, lesdits listels (1) étant mis en oeuvre en reliant, sur une même rangée, les extrémités de chaque listel avec celles de celui successif, de manière à obtenir un effet de continuité parfaite et une trame régulière où aucune des lignes de raccordement des listels d'une rangée ne coïncide avec les lignes de raccordement des listels positionnés sur la rangée adjacente.

2. Méthode pour la réalisation de sols, selon la revendication 1), caractérisée en ce que les susdites lamelles en bois de prix (3) montées sur la susdite couche en bois de qualité inférieure (2) ont toutes la même longueur.

3. Méthode pour la réalisation de sols, selon la revendication 1), caractérisée en ce que les susdites lamelles en bois de prix (3) montées sur la susdite couche en bois de qualité inférieure (2) ont deux longueurs différentes et sont disposées selon une alternance régulière où une lamelle de longueur majeure est toujours alternée à une lamelle de longueur inférieure.

4. Méthode pour la réalisation de sols, selon la revendication 1), caractérisée en ce que chaque paire consécutive des susdites lamelles en bois de prix (3) montées sur la susdite couche en bois de qualité inférieure (2) est disposée de manière à ce que le dessin des fibres naturelles d'une lamelle soit symétrique à celui de la lamelle consécutive.
